# EUROPEAN PATENT APPLICATION

(11) **EP 4 692 702 A1**
(43) Date of publication of application: **11.02.2026**
(21) Application number: 24778455.6
(22) Date of filing: 07.05.2024
(51) Int. Cl.: F25J 3/00, C01B 32/50, C07C 1/02

(54) **CARBON DIOXIDE SEPARATION DEVICE, FUEL SYNTHESIS DEVICE, CARBON DIOXIDE SEPARATION METHOD, AND FUEL PRODUCTION METHOD**

(30) Priority: 29.03.2023 JP 2023053337
(71) Applicant: Shoichiro Irimajiri Inc., Tokyo 104-0061 (JP); Ishikawa Energy Research Co., Ltd., Ota-shi, Gunma 379-2304 (JP)
(72) Inventor: IRIMAJIRI, Shoichiro, Tokyo 104-0061 (JP); ISHIKAWA, Mitsuru, Ota-shi, Gunma 379-2304 (JP); KAYANUMA, Hidetaka, Ota-shi, Gunma 379-2304 (JP)
(74) Representative: Plasseraud IP
(86) International application number: PCT/IB2024/054411
(87) International publication number: WO 2024/201444

(57) **Abstract**

A carbon dioxide separation device and so on capable of effectively separating carbon dioxide from atmospheric air are provided. A carbon dioxide separation device 10 is a device to separate carbon dioxide from air 17. The carbon dioxide separation device 10 includes a compressor 11, a condenser 12, an expander 13, and a water separation unit 14. The compressor 11 compresses the air 17 to generate compressed air 172. The condenser 12 exchanges heat with the compressed air 172 to generate condensed air 173. The expander 13 expands the condensed air 173 to generate expanded air 174 and solidifies carbon dioxide contained in the expanded air 174. The water separation unit 14 removes moisture from the air 17 before the air 17 is introduced into the compressor 11.

## Description

### TECHNICAL FIELD

The present invention relates to a carbon dioxide separation device and so on to separate carbon dioxide from atmospheric air.

### BACKGROUND ART

The concentration of carbon dioxide in the atmosphere tends to be increasing. Specifically, according to a report by the Japan Meteorological Agency, the global average concentration of carbon dioxide in the atmosphere rose from 340 ppm in 1985 to 410 ppm in 2020.

Factors contributing to the long-term increase in the concentration of carbon dioxide in the atmosphere are those associated with human activities such as fossil fuel consumption, cement production, and land use changes such as deforestation. Part of emitted carbon dioxide is absorbed by plants and the oceans, but the rest accumulates in the atmosphere. Therefore, if current human activities continue without any change, the concentration of carbon dioxide in the atmosphere is expected to increase further.

Meanwhile, the earth is currently hottest during the past 1400 years. Global warming not only causes increases in average temperatures, but also brings about various climate changes such as increases in abnormally high temperatures (heat waves), heavy rainfall, and droughts. The effects of this have already emerged in natural ecosystems and human society, such as changes in biological activity and impacts on water resources and agricultural crops due to an early arrival of spring and others. Global temperatures are expected to rise further in the future, which is considered to make increasingly serious impacts on water, ecosystems, food, coastal areas, human health, and so on.

Although the causal relationship between an increase in the concentration of carbon dioxide in the atmosphere and the global warming is yet to be clearly clarified at present, there is a clear correlation between the two. To limit or reduce an increase in the concentration of carbon dioxide in the atmosphere is expected to curb the global warming.

The following Patent Literatures describe the inventions for separating carbon dioxide from gas.

### CITATION LIST

### PATENT LITERATURE

Patent Literature 1: Japanese Patent No. 6086998
Patent Literature 2: Japanese Patent Application Publication No. 2010-266154
Patent Literature 3: Japanese Patent Application Publication No. 2009-262016
Patent Literature 4: Japanese Patent No. 3778674

### SUMMARY OF THE INVENTION

### TECHNICAL PROBLEM

However, various problems are anticipated in the attempt to reduce the concentration of carbon dioxide in the atmosphere on a global scale.

It is generally believed that atmospheric air is composed mostly of nitrogen (78.08%), oxygen (20.95%), argon (0.93%), and carbon dioxide (0.03%). However, the atmospheric air actually contains water vapor. A percentage of water vapor in the atmospheric air varies depending on atmospheric conditions. Specifically, the percentage of water vapor in the atmospheric air varies depending on a temperature, an air pressure, weather, and others. The percentage of water vapor in the atmospheric air also varies depending on a location on the earth and also changes over time. However, no method of separating carbon dioxide from atmospheric air has been proposed with these issues taken into consideration.

The present invention has been made in view of these problems, and an object of the present invention is to provide a carbon dioxide separation device and so on capable of effectively separating carbon dioxide from atmospheric air.

### SOLUTION TO PROBLEM

The present invention provides a device to separate carbon dioxide from air, which is atmospheric air, the device including a compressor, a condenser, an expander, and a water separation unit, wherein the compressor compresses the air to generate compressed air, the condenser exchanges heat with the compressed air to generate condensed air, the expander expands the condensed air to generate expanded air, and solidifies the carbon dioxide contained in the expanded air, and the water separation unit separates moisture from the air before the air is introduced into the compressor.

The carbon dioxide separation device in the present invention further includes an air cooling unit, wherein the air cooling unit cools the air at a preceding stage of the water separation unit.

In the carbon dioxide separation device in the present invention, the expander solidifies the moisture contained in the air, and the air cooling unit cools the air by performing heat exchange between the solidified moisture and the air.

In the carbon dioxide separation device in the present invention, the water separation unit separates part of the moisture contained in the air.

A fuel synthesis device in the present invention includes the carbon dioxide separation device and a fuel synthesis unit, wherein the fuel synthesis unit generates fuel from the carbon dioxide separated from the air by the carbon dioxide separation device.

The present invention provides a method of separating carbon dioxide from air, which is atmospheric air, the method including: compressing the air to generate compressed air; exchanging heat with the compressed air to generate condensed air; expanding the condensed air to generate expanded air and solidifying the carbon dioxide contained in the expanded air; and separating moisture from the air before the air is compressed.

A fuel production method in the present invention is a fuel production method including the method of separating carbon dioxide, and includes generating fuel from the carbon dioxide separated from the air.

### ADVANTAGEOUS EFFECTS OF INVENTION

The carbon dioxide separation device in the present invention is a device to separate carbon dioxide from air, which is atmospheric air, the device including a compressor, a condenser, an expander, and a water separation unit, wherein the compressor compresses the air to generate compressed air, the condenser exchanges heat with the compressed air to generate condensed air, the expander expands the condensed air to generate expanded air, and solidifies the carbon dioxide contained in the expanded air, and the water separation unit separates moisture from the air before the air is introduced into the compressor. According to the carbon dioxide separation device in the present invention, it is possible to reduce the loads on the compressor and the expander by removing the moisture from the air before the air is introduced into the compressor. In addition, the expander is prevented from freezing a large amount of moisture contained in the condensed air. Therefore, the carbon dioxide is effectively separated from the atmospheric air, which is expected to curb the global warming.

Moreover, the carbon dioxide separation device in the present invention further includes an air cooling unit, wherein the air cooling unit cools the air at a preceding stage of the water separation unit. According to the carbon dioxide separation device in the present invention, the untreated air is cooled, so that the water separation unit can easily remove the moisture from the air.

In addition, in the carbon dioxide separation device in the present invention, the expander solidifies the moisture contained in the air, and the air cooling unit cools the air by causing the air to exchange heat with the solidified moisture. According to the carbon dioxide separation device in the present invention, the energy required to cool the air can be reduced.

Moreover, in the carbon dioxide separation device in the present invention, the water separation unit leaves some moisture in the air, thereby leaving the solid moisture in the treated air, so that the untreated air can be cooled by using the solid moisture.

A fuel synthesis device in the present invention includes the carbon dioxide separation device and a fuel synthesis unit, wherein the fuel synthesis unit generates fuel from the carbon dioxide separated from the air by the carbon dioxide separation device. According to the fuel synthesis device in the present invention, it is possible to generate a huge amount of fuel from atmospheric air.

The present invention also provides a method of separating carbon dioxide from air, which is atmospheric air, the method including: compressing the air to generate compressed air; exchanging heat with the compressed air to generate condensed air; expanding the condensed air to generate expanded air and solidifying the carbon dioxide contained in the expanded air; and separating moisture from the air before the air is compressed. According to the method of separating carbon dioxide, the moisture is removed from the air before the air is introduced into the compressor, which prevents the expander from having a phenomenon in which the moisture contained in the compressed air is frozen and the frozen moisture combines with carbon dioxide. In other words, the expander can effectively remove only carbon dioxide.

Moreover, a fuel production method in the present invention is a fuel production method including the method of separating carbon dioxide, and includes generating fuel from the carbon dioxide separated from the air. According to the fuel production method in the present invention, it is possible to generate a huge amount of fuel from atmospheric air.

### BRIEF DESCRIPTION OF DRAWINGS

[FIG. 1] FIG. 1 is a block diagram illustrating a carbon dioxide separation device according to an embodiment of the present invention.
[FIG. 2] FIG. 2 is a table presenting effects of the carbon dioxide separation device according to the embodiment of the present invention.
[FIG. 3] FIG. 3 is a table presenting influences of operation environments on the carbon dioxide separation device according to the embodiment of the present invention.
[FIG. 4] FIG. 4 is a graph presenting a behavior of a refrigerant in the carbon dioxide separation device according to the embodiment of the present invention.

### DESCRIPTION OF EMBODIMENTS

Hereinafter, an embodiment of the present invention will be described in detail based on the drawings. In the following description, the same elements will be basically assigned with the same reference signs, and the repetitive description thereof will be omitted.

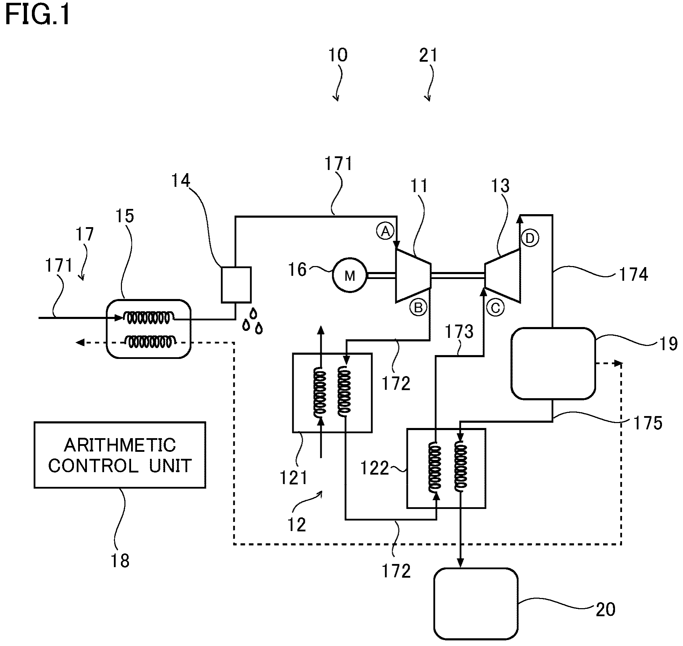

FIG. 1 is a block diagram illustrating a carbon dioxide separation device 10.

The carbon dioxide separation device 10 is a device to separate carbon dioxide from air 17 by using an air refrigeration cycle. The air 17 is, for example, atmospheric air. Since the carbon dioxide separation device 10 is capable of reducing the concentration of carbon dioxide in the atmosphere by separating carbon dioxide from the atmospheric air, the carbon dioxide separation device 10 is expected to curb the global warming.

The carbon dioxide separation device 10 can be installed anywhere on the earth as long as it can take in atmospheric air. For example, the carbon dioxide separation device 10 can be installed on land, underground, on the sea, under the sea, on the seabed, or the like. As will be described later, the carbon dioxide separation device 10 is preferably installed in an area on the earth with low temperature and low humidity. The low atmospheric temperature reduces the energy required to cool the atmospheric air to the freezing point of carbon dioxide. The low atmospheric humidity reduces the energy required to cool the atmospheric air. For example, the carbon dioxide separation device 10 is preferably installed in the Antarctic, the Arctic, or the like.

As will be described later, the air treated by the carbon dioxide separation device 10 is released to the atmosphere. The carbon dioxide collected by the carbon dioxide separation device 10 is used for industrial applications. Instead, the collected carbon dioxide may be used for food cultivation or stored in a final treatment facility built in a deep area under the ground.

Specifically, the carbon dioxide separation device 10 includes a compressor 11, a condenser 12, an expander 13, and a water separation unit 14 as main components. The components constituting the carbon dioxide separation device 10 are connected to each other via piping not illustrated herein, and the air 17 flows through the piping. The carbon dioxide separation device 10 includes an air cooling unit 15, the water separation unit 14, the compressor 11, a first condenser 121, a second condenser 122, the expander 13 and a separation unit 19 arranged in this order from the upstream side of the flow of air 17. The carbon dioxide separation device 10 also includes an arithmetic control unit 18, for example, a CPU. The arithmetic control unit 18 controls operations of the components constituting the carbon dioxide separation device 10.

The air 17 will be referred to as different terms at respective treatment stages in the carbon dioxide separation device 10. Untreated air 171 is the air 17 before the air 17 is introduced to the compressor 11. Compressed air 172 is the air 17 compressed by the compressor 11. Condensed air 173 is the air 17 condensed by the condenser 12. Expanded air 174 is the air 17 expanded by the expander 13. Treated air 175 is the air 17 after the air 17 leaves the separation unit 19.

The air cooling unit 15 cools the untreated air 171 taken in from the outside. The air cooling unit 15 may employ a known cooling device such as a refrigeration cycle or a Peltier element. Instead, the air cooling unit 15 may also employ a mechanism for exchanging heat between solid water (ice) separated by the separation unit 19 (to be described later) and the untreated air 171. When such a mechanism is employed, the energy consumed by the air cooling unit 15 can be reduced. When the untreated air 171 is cooled by the air cooling unit 15, the humidity of the untreated air 171 increases so that the water separation unit 14 to be described later can easily separate the moisture from the water separation unit 14.

The water separation unit 14 removes the moisture from the untreated air 171. As a specific mechanism of the water separation unit 14, there may be employed a centrifuge to separate the moisture from the untreated air 171 by a centrifugal force, a membrane to capture only the moisture contained in the untreated air 171, or the like. The water separation unit 14 may remove all the moisture contained in the untreated air 171 but preferably removes part of the moisture contained in the untreated air 171. By way of such removal, a predetermined amount of moisture can be left in the untreated air 171 to be treated in the carbon dioxide separation device 10, as will be described later. As a result, the solid moisture separated from the expanded air 174 in the separation unit 19 can be supplied to the air cooling unit 15, and the air cooling unit 15 can cool the air cooling unit 15 using the solid moisture.

The compressor 11 compresses the air 17, thereby generating the compressed air 172. From the untreated air 171 introduced into the compressor 11, the moisture is already separated. Accordingly, the compressed air 172 compressed by the compressor 11 easily becomes hot.

The condenser 12 exchanges heat with the compressed air 172, thereby generating condensed air 173. The condenser 12 includes a first condenser 121 and a second condenser 122 arranged in this order from the upstream side in the flow of the air 17.

The first condenser 121 exchanges the heat with the compressed air 172, thereby condensing the compressed air 172. The first condenser 121 is an instrument to radiate the heat to the outside of the carbon dioxide separation device 10. As the first condenser 121, for example, a general heat exchanger to exchange heat with air in the atmosphere by blowing the air may be employed. Here, the heat exchange in the first condenser 121 may be heat exchange between the compressed air 172 and the solid moisture obtained in the separation unit 19.

The second condenser 122 further exchanges the heat with the compressed air 172, thereby condensing the compressed air 172. The second condenser 122 is an instrument to recover the heat inside the carbon dioxide separation device 10. The second condenser 122 may perform heat exchange between the compressed air 172 and the treated air 175 from which the moisture and carbon dioxide are removed by the separation unit 19. Instead, the second condenser 122 may perform heat exchange between the compressed air 172 and the solid moisture or solid carbon dioxide obtained by the separation unit 19.

The condensed air 173 condensed by the condenser 12 is sent to the expander 13.

The expander 13 expands the condensed air 173, thereby generating expanded air 174. Further, the expander 13 solidifies the carbon dioxide contained in the expanded air 174. Specifically, the expander 13 expands the condensed air 173, thereby generating the expanded air 174 at a temperature of -79°C or below. Since the temperature of the expanded air 174 is extremely low, the carbon dioxide contained in the expanded air 174 is solid. Similarly, the water contained in the expanded air 174 is also solid.

In the present embodiment, the water separation unit 14 arranged at the preceding stage removes the moisture from the untreated air 171. Therefore, in the expander 13, the moisture contained in the condensed air 173 is limited. This makes it possible to easily separate the carbon dioxide from the condensed air 173.

Here, the compressor 11 and the expander 13 share a driving shaft. This driving shaft is driven by a motor 16. Since the compressor 11 and the expander 13 can be driven by the single motor 16 in this structure, it is possible to reduce the energy required to operate the carbon dioxide separation device 10. Here, instead of the motor 16, an internal combustion engine such as an engine or the like may be employed.

The separation unit 19 separates the solidified carbon dioxide and the solidified water from the expanded air 174 expanded by the expander 13. This separation may involve a centrifugal force to remove the carbon dioxide and the water or a membrane-like member to remove the carbon dioxide and the water.

Here, the solidified carbon dioxide has a specific gravity greater than that of the solidified water. Specifically, the specific gravity of the solidified carbon dioxide is 1.56. Therefore, using the specific gravity difference between the two, a separation device using a centrifugal force can separate the solidified carbon dioxide and the solidified water from each other. As will be described later, the solid water separated by the separation unit 19 is sent to the air cooling unit 15. Meanwhile, the solid carbon dioxide separated by the separation unit 19 is released to outside of the system via the second condenser 122. In addition, here, the solidified carbon dioxide and water may be crushed into granules or powder at the preceding stage of the separation unit 19. In this way, the solidified carbon dioxide and water can be more easily separated by the centrifugation.

In the present embodiment, the aforementioned water separation unit 14 removes most of the moisture from the untreated air 171. For this reason, the amount of moisture obtained by the separation unit 19 is not large. Therefore, the separation unit 19 can obtain carbon dioxide with high purity.

The solidified carbon dioxide generated by the separation unit 19 is used for industrial applications or stored as described above. The solid water generated by the separation unit 19 is first used for the heat exchange in the air cooling unit 15 and then is released to the external environment as described above.

Further, the treated air 175 from which the carbon dioxide and so on are removed by the separation unit 19 is subjected to the heat exchange in the second condenser 122, thereby rising in temperature, and then is released into the external environment. The treated air 175 is air having a carbon dioxide content lower than that of the untreated air 171. Therefore, releasing a large amount of the treated air 175 into the atmosphere makes it possible to reduce the concentration of carbon dioxide in the atmosphere on the global scale and thereby contribute to the prevention of the global warming.

Moreover, the carbon dioxide separation device 10 having the above structure and a fuel synthesis unit 20 constitute a fuel synthesis device 21. Furthermore, the carbon dioxide separation method described above can be used to realize a synthetic fuel production method of producing synthetic fuel using the fuel synthesis device 21.

The fuel synthesis unit 20 is a device to produce the synthetic fuel from the carbon dioxide collected by the separation unit 19 of the carbon dioxide separation device 10. Using a specific photocatalyst, the fuel synthesis unit 20 first produces activated water from the carbon dioxide and water that are solidified by the carbon dioxide separation device 10. Next, the fuel synthesis unit 20 causes the carbon dioxide and base oil to react with each other, thereby continuously producing the synthetic fuel with the same composition as the base oil. Here, as the base oil, for example, light oil, heavy oil, kerosene, gasoline, kerosene, or the like may be employed.

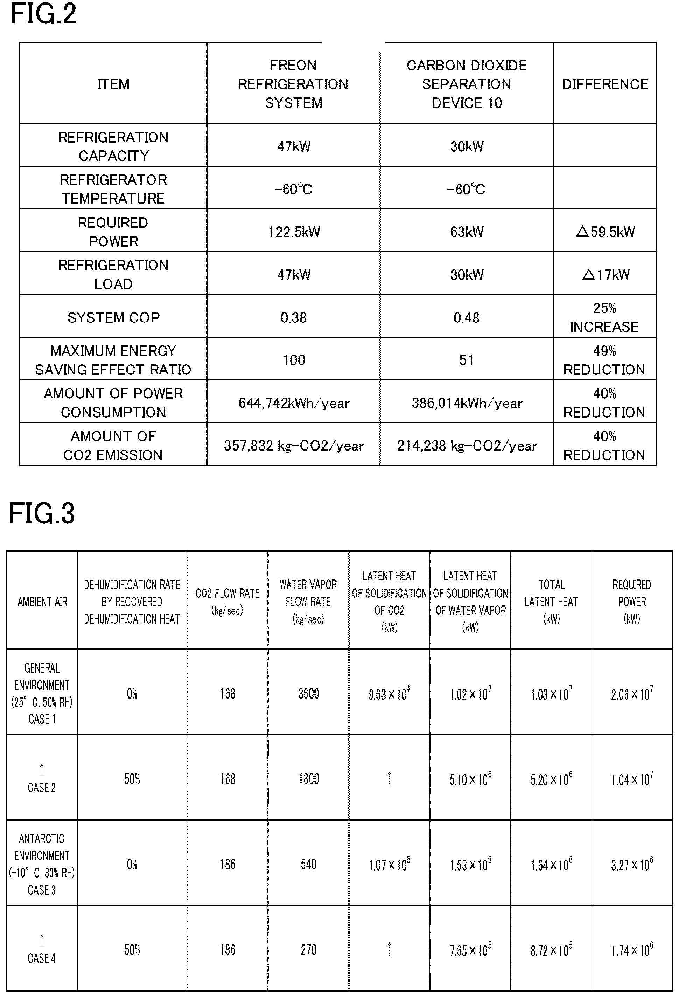

FIG. 2 is a table presenting effects of the carbon dioxide separation device 10.

Here, each of specifications for comparing refrigeration systems is examined. First, the specific heats of water and carbon dioxide are examined. The latent heat of sublimation of carbon dioxide is 573 kJ/kg at 1 atm and -79°C. The latent heat of vaporization of water is 2500 kJ/kg at 1 atm and 0°C. The latent heat of fusion of water is 335 kJ/kg at 1 atm and 0°C. The specific heat of water is 4.2 kJ/kgK at 1 atm and 0°C. The specific heat of ice is 2.1 kJ/kgK at 1 atm and -1°C. The specific heat of carbon dioxide is 0.82 kJ/kgK at 1 atm and 0°C.

Next, the composition of an ambient air is examined. For example, in a general environment at 25°C and 50% RH (relative humidity), the density of air is 1.17 kg/m³, the density of carbon dioxide, which accounts for 0.048 wt%, is 5.6×10⁻⁴ kg/m³, and the density of water vapor is 0.012 kg/m³. Meanwhile, for example, in the Antarctic environment at -10°C and 80% RH, the density of air is 1.30 kg/m³ , the density of carbon dioxide, which accounts for 0.048 wt%, is 6.2×10⁻⁴ kg/m³, and the density of water vapor is 0.0018 kg/m³.

In terms of the coefficient of performance (COP) of the air refrigeration cycle, for example, COP ≈ 0.5 has been achieved with power recovery by the expander.

Here, from various points of view, a Freon refrigeration system that uses fluorocarbon as a refrigerant and the carbon dioxide separation device 10 according to the present embodiment are compared.

In terms of refrigeration capacity, the Freon refrigeration system has higher performance than that of the carbon dioxide separation device 10.

In terms of cooling temperature, the Freon refrigeration system and the carbon dioxide separation device 10 are equivalent.

In terms of required power, the carbon dioxide separation device 10 is significantly smaller than the Freon refrigeration system. Therefore, the carbon dioxide separation device 10 can separate carbon dioxide from the atmospheric air using a smaller amount of energy.

In terms of refrigeration load, the carbon dioxide separation device 10 is smaller than the Freon refrigeration system. Therefore, the carbon dioxide separation device 10 can reduce energy consumption for separating carbon dioxide from the atmospheric air.

In terms of system COP, the carbon dioxide separation device 10 is higher than the Freon refrigeration system. Therefore, the carbon dioxide separation device 10 achieves higher efficiency in the operation for separating carbon dioxide from the atmospheric air.

In terms of maximum energy saving effect ratio, the carbon dioxide separation device 10 is lower than the Freon refrigeration system. For this reason, the carbon dioxide separation device 10 is excellent from the viewpoint of energy saving.

In terms of the amount of power consumption, the carbon dioxide separation device 10 is smaller than the Freon refrigeration system. Therefore, the carbon dioxide separation device 10 can reduce the amount of power consumption for separating carbon dioxide from the atmospheric air.

In terms of the amount of carbon dioxide emission, the carbon dioxide separation device 10 is smaller than the Freon. Therefore, the carbon dioxide separation device 10 can reduce the amount of carbon dioxide generated with the operation of the device for separating the carbon dioxide from the atmospheric air.

FIG. 3 is a table presenting influences of operation environments on the carbon dioxide separation device 10. FIG. 3 presents the cases where the carbon dioxide separation device 10 treats 300,000 m³/sec of air.

Here, examined are the following cases: the dehumidification rate is 0% in a general environment (Case 1), the dehumidification rate is 50% in the general environment (Case 2), the dehumidification rate is 0% in an Antarctic environment (Case 3), and the dehumidification rate is 50% in the Antarctic environment (Case 4). The general environment is an environment found in areas far from the Antarctic on the earth, which is a warm environment with, for example, a temperature of about 25°C and a relative humidity (RH) of 50%. The Antarctic environment is an environment found in Antarctica, which is a cold environment with, for example, a temperature of about -10°C and a relative humidity (RH) of 80%. The dehumidification rate is a rate at which the aforementioned water separation unit 14 removes the moisture from the untreated air 171.

In terms of the carbon dioxide flow rate, Case 1 and Case 2 are lower than Case 3 and Case 4. For this reason, the carbon dioxide separation device 10 is capable of separating a larger amount of carbon dioxide from the air when being operated in the Antarctic environment.

The water vapor flow rate decreases in the order of Case 1, Case 2, Case 3, and Case 4. In other words, the water vapor flow rate is highest in Case 1 and lowest in Case 4. The water vapor flow rates in Cases 3 and 4 in the Antarctic environment are much lower than the water vapor flow rates in Cases 1 and 2 in the general environment. Thus, when the carbon dioxide separation device 10 is operated in the Antarctic environment, the loads on the compressor 11 and the expander 13 can be reduced.

The latent heat of solidification of carbon dioxide and the latent heat of solidification of water vapor are values calculated from the aforementioned carbon dioxide flow rate and water vapor flow rate, respectively. The total latent heat is a value obtained by adding up the latent heat of solidification of carbon dioxide and the latent heat of solidification of water vapor. The total latent heat decreases in the order of Case 1, Case 2, Case 3, and Case 4. In other words, the total latent heat is highest in Case 1 and is lowest in Case 4.

The required power is the power required to operate the carbon dioxide separation device 10. The required power decreases in the order of Case 1, Case 2, Case 3, and Case 4. In other words, the required power is greatest in Case 1 and is smallest in Case 4. Comparing Case 1 and Case 4, the required power in Case 4 is about 10% of the required power in Case 1.

Therefore, in the case where Case 4, in which the dehumidification rate is 50% in Antarctica, is employed as an operation environment for the carbon dioxide separation device 10, the power required to operate the carbon dioxide separation device 10 can be reduced.

Note that, in the case where air with a flow rate of 300,000 m³/sec is to be treated by the carbon dioxide separation device 10 in Case 4, the required power for this can be supplied by several nuclear power plants.

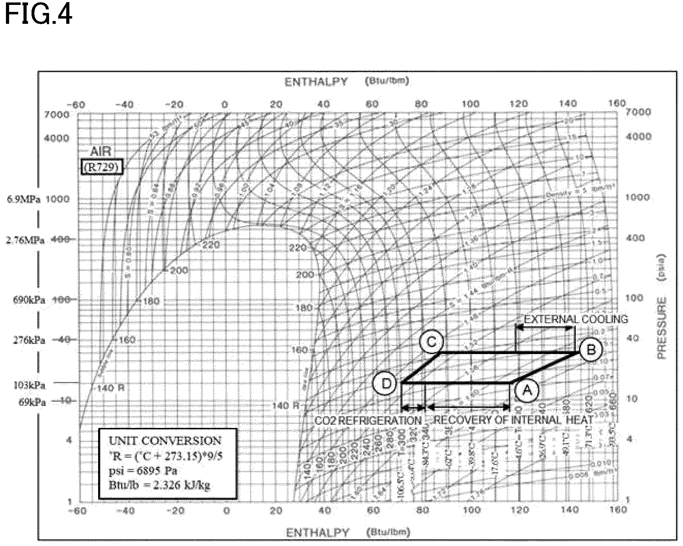

FIG. 4 is a PH chart presenting a behavior of the refrigerant in the carbon dioxide separation device 10. In the graph in FIG. 4, the horizontal axis represents enthalpy and the vertical axis represents pressure.

Points A to E marked in FIG. 4 indicate the air pressure and the temperature at points A to E marked in FIG. 1. Specifically, the point A is a point immediately before the air is introduced into the compressor 11, the point B is a point immediately after the air is discharged from the compressor 11, the point C is a point immediately before the air is introduced into the expander 13, and the point D is a point immediately after the air is discharged from the expander 13.

First, the point A represents the untreated air 171 before introduction into the compressor 11 from outside, where the untreated air 171 has a temperature of -10°C and an atmospheric pressure of 1 atm. The point B represents the compressed air 172 after adiabatic compression by the compressor 11 and before introduction into the first condenser 121, where the compressed air 172 has a temperature of 60°C and an atmospheric pressure of 2 atm. The point C represents the condensed air 173 after isobaric cooling by the second condenser 122 and before introduction into the expander 13, where the condensed air 173 has a temperature of -70°C and has an atmospheric pressure of 2 atm. The point D represents the expanded air 174 after adiabatic expansion by the expander 13 and before introduction into the separation unit 19, where the expanded air 174 has a temperature of -105°C and an atmospheric pressure of 1 atm.

In the present embodiment, the aforementioned second condenser 122 performs the heat exchange therein by recovering the internal heat, so that the compressed air 172 can be effectively cooled. In addition, since the untreated air 171 can be cooled by using the solidified moisture separated from the expanded air 174 as described above, the heat of dehumidification can be recovered effectively.

Hereinabove, the embodiment of the present invention is described, but the present invention should not be limited to the above embodiment but may be modified as needed without departing from the gist of the present invention. Moreover, the aforementioned structures may be combined with each other.

For example, the carbon dioxide separation device 10 and the fuel synthesis device 21 according to the present embodiment desirably use natural energy obtained from wind power generation, solar power generation, or the like. In this way, the carbon dioxide separation device 10 and the fuel synthesis device 21 can be operated with less burden applied on the global environment.

### REFERENCE SIGNS LIST

- 10: carbon dioxide separation device
- 11: compressor
- 12: condenser
- 121: first condenser
- 122: second condenser
- 13: expander
- 14: water separation unit
- 15: air cooling unit
- 16: motor
- 17: air
- 171: untreated air
- 172: compressed air
- 173: condensed air
- 174: expanded air
- 175: treated air
- 18: arithmetic control unit
- 19: separation unit
- 20: fuel synthesis unit
- 21: fuel synthesis device

## Claims

1. A carbon dioxide separation device configured to separate carbon dioxide from air, which is atmospheric air, comprising a compressor, a condenser, an expander, and a water separation unit, wherein
the compressor compresses the air to generate compressed air,
the condenser exchanges heat with the compressed air to generate condensed air,
the expander expands the condensed air to generate expanded air, and solidifies the carbon dioxide contained in the expanded air, and
the water separation unit separates moisture from the air before the air is introduced into the compressor.

2. The carbon dioxide separation device according to claim 1, further comprising an air cooling unit, wherein
the air cooling unit cools the air at a preceding stage of the water separation unit.

3. The carbon dioxide separation device according to claim 2, wherein
the expander solidifies the moisture contained in the air, and
the air cooling unit cools the air by performing heat exchange between the solidified moisture and the air.

4. The carbon dioxide separation device according to claim 1, wherein the water separation unit separates part of the moisture contained in the air.

5. A fuel synthesis device comprising the carbon dioxide separation device according to claim 1 and a fuel synthesis unit, wherein
the fuel synthesis unit generates fuel from the carbon dioxide separated from the air by the carbon dioxide separation device.

6. A method of separating carbon dioxide from air, which is atmospheric air, comprising:
compressing the air to generate compressed air;
exchanging heat with the compressed air to generate condensed air;
expanding the condensed air to generate expanded air and solidifying the carbon dioxide contained in the expanded air; and
separating moisture from the air before the air is compressed.

7. A fuel production method including the method of separating carbon dioxide according to claim 6, comprising
generating fuel from the carbon dioxide separated from the air.
